# EUROPÄISCHE PATENTSCHRIFT

(11) **EP 3 990 804 B1**
(45) Veröffentlichungstag und Bekanntmachung des Hinweises auf die Patenterteilung: **03.07.2024**
(21) Anmeldenummer: 20725488.9
(22) Anmeldetag: 08.05.2020
(51) Int. Cl.: F16H 57/08, F16H 1/28, F16H 1/48

(54) **SPIELFREIES PLANETENRADGETRIEBE**
BACKLASH-FREE PLANETARY GEAR
ENGRENAGE PLANÉTAIRE SANS JEU

(30) Priorität: 26.06.2019 DE 102019117227
(43) Veröffentlichungstag der Anmeldung: 04.05.2022
(73) Patentinhaber: KNORR-BREMSE Systeme für Nutzfahrzeuge GmbH, 80809 München (DE)
(72) Erfinder: LETTOW, Dirk, 42327 Wuppertal (DE); KIRSCHBAUM, Sven, 40822 Mettmann (DE); MÜLLER, Jens-Hauke, 42553 Velbert-Neviges (DE)
(86) Internationale Anmeldenummer: PCT/EP2020/062885
(87) Internationale Veröffentlichungsnummer: WO 2020/259906

(56) Entgegenhaltungen:
- JP-A- H0 348 045
- JP-A- H09 144 818
- JP-B2- H0 788 878
- JP-U- H0 732 248
- US-A1- 2008 182 708

## Beschreibung

Die Erfindung betrifft ein Planetenradgetriebe mit einem Sonnenrad, einem Hohlrad und zumindest einem ersten Planetenrad sowie zumindest einem zweiten Planetenrad, wobei das erste Planetenrad sowie das zweite Planetenrad auf einem Planetenträger angeordnet sind, und das Sonnenrad, das Hohlrad, das erste Planetenrad sowie das zweite Planetenrad miteinander kämmen.

In der Getriebetechnik, insbesondere im Zusammenhang mit Planetenradgetrieben (oder auch Planetengetriebe genannt), ist es erstrebenswert, das Zahnflankenspiel der ineinandergreifenden bzw. kämmenden Zahnräder einstellen bzw. insbesondere minimieren zu können. Aus dem Stand der Technik sind bereits verschiedenste Maßnahmen bekannt, um ein möglichst spielfreies Planetenradgetriebe zu erreichen. Insofern ist dann von einem verdrehspielfreien oder spielfreien Planetenradgetriebe die Rede.

Aus der EP 2 735 767 A1 ist beispielsweise bereits ein Planetenradgetriebe bekannt. Das Planetenradgetriebe gemäß EP 2 735 767 A1 weist ein Sonnenrad und ein Hohlrad, sowie ferner mehrere Planetenräder auf, wobei jeweils eine Gruppe an Planetenrädern auf einem eigenen Planetenträger angeordnet und mit diesem verbunden ist. Zwecks Minimierung des Zahnflankenspiels sind die beiden separaten, als voneinander getrennte Bauteile vorgesehenen Planetenträger durch elastische Federelemente erneut miteinander verbunden. Dadurch können beim Zusammenbau des Planetenradgetriebes zunächst die dem einen Planetenträger zugeordneten Planetenräder mit den einen Seiten der Zahnflanken des Sonnen- sowie Hohlrads in einer Drehrichtung in Anlage gebracht werden. Sodann kann der andere Planetenträger mitsamt der diesem zugeordneten Planetenräder gegen den Widerstand der verbindenden Federelemente verdreht werden. Schließlich können diese verdrehten Planetenräder dann mit den anderen Seiten der Zahnflanken des Sonnen- sowie Hohlrads in die entgegengesetzte Drehrichtung in Anlage gebracht werden, wodurch das Zahnflankenspiel schlussendlich minimiert ist.

Nachteilig an dem aus der EP 2 735 767 A1 bekannten Planetenradgetriebe ist jedoch, dass die beschriebenen Maßnahmen zur Minimierung des Zahnflankenspiels nur bei Planetenradgetrieben mit zwei Planetenradsätzen und zwei separat voneinander vorgesehenen Planetenträgern möglich sind. Die zwei Planetenradsätze müssen nämlich an unterschiedlichen axialen Positionen vorgesehen sein, sodass die axial voneinander beabstandeten Planetenräder der beiden Planetenradsätze gegeneinander verdreht und jeweils an dem Hohlrad und Sonnenrad ausgerichtet werden können. Der konstruktive Aufwand eines solchen Planetengetriebes ist demnach relativ hoch. Zur Montage muss zunächst der eine Planetenradsatz ausgerichtet und mit dem Sonnenrad und dem Hohlrad in Eingriff gebracht werden muss und sodann muss nach einem Verdrehen des anderen Planetenradsatzes dieser andere Planetenradsatz noch ausgerichtet und mit dem Sonnenrad und dem Hohlrad in Eingriff gebracht werden. Dementsprechend ist auch der Montageaufwand bzw. Aufwand zur Einstellung des Zahnflankenspiels relativ hoch. Zudem müssen die Planetenräder des zweiten Planetenradsatzes während der Montage gegen die rückstellende Kraft der Federelemente verdreht werden und durch das in Eingriff Bringen mit dem Sonnenrad und dem Hohlrad in dieser Stellung gesichert werden. Dabei besteht die Gefahr, dass die Planetenräder vor dem in Eingriff Bringen wieder zurück in ihre nicht verstellte Positionen fallen und somit doch ein größeres Zahnflankenspiel vorherrscht. Ferner besteht die gegensätzliche Gefahr, dass ein zu starkes Verdrehen des zweiten Planetenradsatzes vorgenommen wird, woraus eine zu starke Vorspannung der beiden Planetenradsätze gegeneinander resultieren kann.

Weiterhin offenbart JP H07 32248 U ein Planetenradgetriebe mit der Möglichkeit, die Einstellung des Eingriffsspiels des Planetenrads und des Sonnenrads sowie des Hohlrads zu verringern.

Die Aufgabe der vorliegenden Erfindung besteht darin, ein Planetenradgetriebe bereitzustellen, welches unter geringerem Aufwand eine Einstellbarkeit des Zahnflankenspiels zwischen Planetenrädern, Sonnenrad und Hohlrad ermöglicht. Die Konstruktion soll dabei möglichst einfach sein.

Erfindungsgemäß wird die Aufgabe durch ein Planetenradgetriebe mit den Merkmalen des Anspruchs 1 gelöst.

Im Einzelnen ist das erfindungsgemäße Planetenradgetriebe dadurch gekennzeichnet, dass der Planetenträger einen ersten Planetenträgerteil und einen zweiten Planetenträgerteil aufweist, wobei der erste Planetenträgerteil und der zweite Planetenträgerteil derart eingerichtet sind, dass sie ausgehend von einer Grundposition gegeneinander verdreht werden und in einer Verdrehposition in ihrer Lage zueinander gesichert werden können, und dass das zumindest eine erste Planetenrad mit dem ersten Planetenträgerteil verbunden ist und das zumindest eine zweite Planetenrad mit dem zweiten Planetenträgerteil verbunden ist.

Wesentlich für die vorliegende Erfindung ist die Erkenntnis, dass, wenn der Planetenträger mit den wenigstens beiden Planetenräder zweigeteilt ausgeführt ist, die beiden Teile des Planetenträger gegeneinander verdreht werden können. Dadurch, dass dabei jeweils einem Teil des Planetenträgers weiterhin je ein oder auch mehrere Planetenräder zugeordnet sind und das andere Planetenrad bzw. die anderen Planetenräder dem anderen Teil des Planetenträgers zugeordnet sind, können die Planetenräder durch die Verdrehung der Planetenträgerteile auch ihre Lage zueinander ändern. Die Planetenräder können somit durch die Verdrehung der Planetenträgerteile entlang ihrer Kreisbahnen bzw. ihrer Bahnkurven konträr zueinander verschoben werden, während das Sonnenrad und das Hohlrad ortsfest bleiben. Auf diese Weise können die jeweiligen Planetenräder in unterschiedliche Drehrichtungen gesehen in Anlage mit den Zahnflanken des Hohlrads bzw. Sonnenrads gebracht werden.

Unter einem Verdrehen der beiden Planetenträgerteile gegeneinander ist ein Verdrehen um die Achse des Planetenträgers zu verstehen. Aus einem solchen Verdrehen resultiert also eine Bewegung des dem jeweiligen Planetenträgerteil zugeordneten Planetenrades bzw. der jeweiligen Planetenräder. Dies entspricht auch einer Bewegung des jeweiligen Planetenrades bzw. der Planetenräder auf ihrer Kreisbahn bzw. Bahnkurve, entlang welcher Kreisbahn bzw. Bahnkurve sich die Planetenräder fortbewegen, während sie mit dem Sonnenrad und dem Hohlrad kämmen. Die Bewegung eines Planetenrades auf seiner Kreisbahn bzw. Bahnkurve ist also derart mit der Bewegung eines diesem Planetenrad zugeordneten Planetenträgerteils gekoppelt, dass das Planetenrad einer Verdrehung des Planetenträgerteils folgt.

Unter einem ersten Planetenträgerteil und einem zweiten Planetenträgerteil ist vorliegend zu verstehen, dass es sich zwar um separate Bauteile handeln kann, die beiden Planetenträgerteile jedoch gemeinsam einen Planetenträger ausbilden.

So ist jedem Planetenträgerteil zumindest ein Planetenrad zugeordnet, sprich, es ist mit ihm verbunden, sodass in einem zusammengebauten Zustand der aus dem ersten Planetenträgerteil und aus dem zweiten Planetenträgerteil gebildete Planetenträger zumindest zwei Planetenräder in einer Stufe aufweist, welche zwei Planetenräder auf einer Bahnkurve entlang des Sonnenrads und des Hohlrads kämmen. Vorliegend sind unter dem ersten Planetenträgerteil und dem zweiten Planetenträgerteil nicht zwei getrennte, separate Planetenträger zu verstehen, die jeweils unterschiedliche Planetenradsätze aufweisen, welche Planetenradsätze jeweils für sich genommen auf einer Bahnkurve entlang des Sonnenrads und des Hohlrads kämmen. Durch die vorliegende Erfindung ist es demnach möglich, das Zahnflankenspiel von Planetenrädern einzustellen, welche Planetenräder entlang derselben Bahnkurve mit dem Sonnenrad und Hohlrad kämmen.

Durch das erfindungsgemäße Planetenradgetriebe ist demnach eine Verstellbarkeit der Position des ersten Planetenrads und des zweiten Planetenrads gegeneinander möglich. Dabei kann auch mehr als nur ein erstes Planetenrad vorgesehen sein. So können beispielsweise bereits zwei, auf der Umlaufbahn bzw. Bahnkurve gesehen gegenüberliegende Planetenräder vorgesehen sein, sowie zwei weitere, ebenfalls auf der Umlaufbahn bzw. Bahnkurve gesehen gegenüberliegende Planetenräder. Insofern kann dann im Sinne der vorliegenden Erfindung von zwei ersten Planetenrädern sowie zwei zweiten Planetenrädern die Rede sein. Dann können zum Beispiel die beiden ersten Planetenräder gemeinsam mit dem ersten Planetenträgerteil, mit dem sie verbunden sind, verdreht und somit ihre Position auf ihrer Umlaufbahn bzw. Bahnkurve gemeinsam geändert werden, während die beiden zweiten Planetenräder beispielsweise mit dem ihnen zugeordneten, zweiten Planetenträgerteil, mit dem sie verbunden sind, an ihrer Position verharren. Es kann auch eine beliebige Anzahl an Planetenrädern vorgesehen sein. Wesentlich ist lediglich, dass verschiedene Planetenräder hinsichtlich ihrer Position auf ihrer Umlaufbahn bzw. Bahnkurve gegeneinander verstellt werden können, indem die beiden Planetenträgerteile gegeneinander verdreht werden.

Ferner kann es sich bei dem erfindungsgemäßen Planetenradgetriebe um ein einstufiges Planetenradgetriebe handeln oder auch um ein mehrstufiges Planetenradgetriebe handeln.

Erfindungsgemäß ist der erste Planetenträgerteil durch zwei außenliegende Scheiben gebildet und der zweite Planetenträgerteil im Wesentlichen zwischen den zwei außenliegenden Scheiben angeordnet. Dadurch wird eine besonders bauraumsparende Ausführungsform erreicht. Unter außenliegenden Scheiben ist vorliegend zu verstehen, dass die beiden Scheiben auf gegenüberliegenden Seiten der Planetenräder angeordnet sind. In anderen Worten sind in Richtung der Achsen der Planetenräder gesehen die Planetenräder zwischen den beiden Scheiben angeordnet. Unter der Formulierung "im Wesentlichen zwischen den zwei außenliegenden Scheiben angeordnet" ist vorliegend zu verstehen, dass der derart angeordnete zweite Planetenträgerteil sich nicht vollständig zwischen den beiden außenliegenden Scheiben erstrecken muss, jedoch ein Hauptteil dieses zweiten Planetenträgerteils dort angeordnet ist.

Nach einer vorteilhaften Ausführungsform des Planetenradgetriebes kann der zweite Planetenträgerteil derart zwischen den zwei außenliegenden Scheiben des ersten Planetenträgerteils angeordnet sein, dass der erste Planetenträgerteil und der zweite Planetenträgerteil in ihrer Lage zueinander durch eine von den zwei außenliegenden Scheiben in Richtung des zweiten Planetenträgerteils wirkende Haltekraft festgelegt werden. Dabei kann im montierten Zustand des Planetenradgetriebes bzw., wenn das Planetenradgetriebe in Betrieb ist, die Haltekraft von den beiden außenliegenden Scheiben auf den dazwischen angeordneten zweiten Planetenträgerteil beispielsweise durch die beiden Scheiben verbindende Verbindungsmittel ausgeübt werden. Dann kann beispielsweise durch Lösen der Verbindungsmittel eine erneute Verdrehbarkeit der beiden Planetenträgerteile gegeneinander erreicht werden. Wenn die die beiden Scheiben zusammendrückende bzw. zusammenhaltende Haltekraft wiederum gelöst wird, können der erste Planetenträgerteil und der zweite Planetenträgerteil gegeneinander verdreht werden. Die grundsätzlich mögliche Verdrehbarkeit der beiden Planetenträgerteile gegeneinander kann also im Montage- bzw. Betriebszustand dadurch verhindert werden, dass die Haltekraft durch die außenliegenden Scheiben aufrechterhalten wird. Ein Lösen der Haltekraft bzw. des daraus resultierenden Druckes führt dann hingegen zum erneuten Erreichen der grundsätzlichen Verdrehbarkeit der beiden Planetenträgerteile.

Nach einer vorteilhaften Ausführungsform des Planetenradgetriebes können die zwei außenliegenden Scheiben des ersten Planetenträgerteils mittels einer Achse des zumindest einen ersten Planetenrads miteinander verbunden sein. Im Falle mehrerer erster Planetenräder können die Scheiben auch mittels der Achsen aller ersten Planetenräder miteinander verbunden sein. Dadurch wird eine konstruktiv einfache Ausführungsform erzielt, da nur wenige weitere Bauteile zum Verbinden der beiden Scheiben notwendig sind.

Erfindungsgemäß sind die zwei außenliegenden Scheiben des ersten Planetenträgerteils mittels zumindest einer Einstellschraube miteinander verbunden. Dabei kann es sich insbesondere um eine Innensechskant-Schraube handeln. Es können auch mehrere Einstellschrauben zur Verbindung der beiden Scheiben vorgesehen sein. Bevorzugt können die Einstellschraube bzw. Einstellschrauben beabstandet von den Achsen der Planetenräder, besonders bevorzugt über den Umfang gleichmäßig verteilt im Vergleich zu den Achsen der Planetenräder, angeordnet sein. Die Einstellschrauben können derart angeordnet sein, dass ein Schraubenkopf der Einstellschraube von einer Außenseite einer der zwei außenliegenden Scheiben hervorsteht, während an einem anderen Ende der Einstellschraube ein Gewinde der Einstellschraube in die andere der zwei außenliegenden Scheiben eingreift. Ein Feststellen der Einstellschraube bzw. Einstellschrauben sorgt erfindungsgemäß für ein Sichern bzw. Festlegen der Position des ersten Planetenträgerteils und des zweiten Planetenträgerteils zueinander während ein Lösen der Einstellschraube bzw. Einstellschrauben eine Verdrehbarkeit der beiden Planetenträgerteile und somit ein Verstellen der Planetenräder zueinander und ein Einstellen des Zahnflankenspiels ermöglicht.

Nach einer vorteilhaften Ausführungsform des Planetenradgetriebes kann sich die zumindest eine Einstellschraube, die die zwei außenliegenden Scheiben des ersten Planetenträgerteils miteinander verbindet, durch wenigstens eine Bohrung des zweiten Planetenträgerteils erstrecken, wobei die wenigstens eine Bohrung des zweiten Planetenträgerteils derart größer als der Durchmesser der Einstellschraube ausgebildet ist, dass bei einem Lösen der zumindest einen Einstellschraube eine Verdrehung des ersten Planetenträgerteils gegenüber dem zweiten Planetenträgerteil möglich ist, auch während sich die Einstellschraube durch die wenigstens eine Bohrung des zweiten Planetenträgerteils erstreckt. Dies gilt ebenso beim Vorsehen mehrerer Einstellschrauben und mehrerer Bohrungen für diese Einstellschrauben im zweiten Planetenträgerteil. Dadurch ist auf einfach handzuhabende Weise auch eine Verstellbarkeit der Planetenräder zueinander im bereits montierten Zustand des Planetengetriebes gewährleistet. So können bei bereits miteinander kämmendem Hohlrad, Sonnenrad und Planetenrädern, die auf dem Planetenträger montiert sind, einfach die Einstellschraube bzw. Einstellschrauben gelöst werden. Dadurch kann dann der außenliegende, erste Planetenträgerteil mitsamt der mit diesem verbundenen Planetenräder sowie der weiterhin die beiden außenliegenden Scheiben des ersten Planetenträgerteils verbindende(n) Einstellschraube(n) verdreht werden. Diese Verdrehung wird möglich durch den Spielraum, den die größere(n) Bohrung(en) im zweiten Planetenträgerteil gegenüber der sich durch die jeweilige Bohrung erstreckende Einstellschraube bereitstellt bzw. bereitstellen. In einem bevorzugten Ausführungsbeispiel kann es sich bei der vorgesehenen Einstellschraube beispielsweise um eine M5x24 Schraube handeln, während die Bohrung in dem zweiten Planetenträgerteil dann einen Durchmesser von 6 mm aufweist und somit genügend Bewegungsspielraum wenigstens für eine gewisse Verschiebung der Einstellschraube innerhalb der Bohrung des zweiten Planetenträgerteils bietet. Insbesondere können mehrere Bohrungen im zweiten Planetenträgerteil vorgesehen sein. So kann der zweite Planetenträgerteil beispielsweise aus zwei gegenüberliegenden Scheiben ausgebildet sein, wobei die Planetenräder zwischen den beiden Scheiben angeordnet sind. Dann kann für jede Einstellschraube bereits jeweils eine Bohrung in jeder der beiden Scheiben des zweiten Planetenträgerteils vorgesehen sein. Pro Einstellschraube kann der zweite Planetenträgerteil dann also bereits zwei Bohrungen aufweisen.

Die Erfindung wird anhand der nachfolgenden Figuren näher erläutert. Die Figuren sind dabei nur beispielhaft zu verstehen, insbesondere stellen diese lediglich ein bevorzugtes Ausführungsbeispiel der Erfindung dar. Es zeigen:
- Figur 1:: ein erfindungsgemäßes Planetenradgetriebe in einer schematischen Frontansicht ohne Wiedergabe des Planetenträgers,
- Figur 2:: den Planetenträger des erfindungsgemäßen Planetenradgetriebes in einer perspektivischen Ansicht, ohne Wiedergabe des Hohlrades sowie des Sonnenrades des Planetengetriebes,
- Figur 3:: den Planetenträger gemäß Fig. 3 in einer weiteren perspektivischen Ansicht von einer entgegengesetzten Seite,
- Figur 4:: ein erfindungsgemäßes Planetenradgetriebe in einer Frontansicht,
- Figur 4A:: das erfindungsgemäßes Planetenradgetriebe in einer Schnittansicht gemäß Schnittlinie A-A in Fig. 4,
- Figur 4B:: das erfindungsgemäßes Planetenradgetriebe in einer Schnittansicht gemäß Schnittlinie B-B in Fig. 4,
- Figur 4C:: das erfindungsgemäßes Planetenradgetriebe in einer Schnittansicht gemäß Schnittlinie C-C in Fig. 4,
- Figur 4D:: das erfindungsgemäßes Planetenradgetriebe in einer Schnittansicht gemäß Schnittlinie D-D in Fig. 4, und
- Figur 5:: ein erfindungsgemäßes Planetenradgetriebe in einer perspektivischen Ansicht.

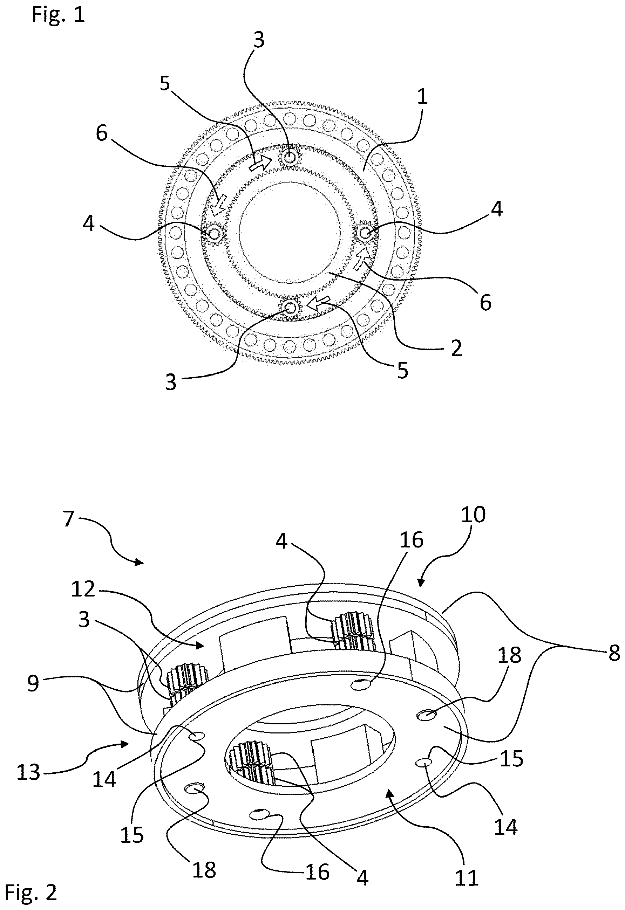

In Fig. 1 ist ein erfindungsgemäßes Planetenradgetriebe dargestellt. Das Planetenradgetriebe umfasst ein Hohlrad 1, sowie ein zentrales Sonnenrad 2. Mit dem Hohlrad 1 sowie mit dem Sonnenrad 2 kämmend bzw. in Eingriff stehend sind ferner insgesamt vier Planetenräder, nämlich zwei erste Planetenräder 3 sowie zwei weitere Planetenräder 4, vorgesehen. Die beiden ersten Planetenräder 3 sind bezüglich ihrer Bahnkurve gegenüberliegend angeordnet, ebenso wie die beiden zweiten Planetenräder 4.

Die ersten Planetenräder 3 sowie die zweiten Planetenräder 4 sind mit einem in Fig. 1 nicht dargestellten Planetenträger verbunden. Dieser Planetenträger wiederum ist zweigeteilt ausgeführt, wie an der folgenden Beschreibung im Zusammenhang mit den weiteren Darstellungen klar wird.

Wesentlich an der vorliegenden Erfindung ist die Erkenntnis, dass über eine relative Verstellung der beiden Planetenträgerteile auch die dem jeweiligen Planetenträgerteil zugeordneten Planetenräder verstellt werden und auf diese Weise das Zahnflankenspiel zwischen ersten Planetenrädern 3, zweiten Planetenrädern 4, Sonnenrad 2 und Hohlrad 1 verstellt bzw. minimiert werden kann. So können die beiden ersten Planetenräder 3 entlang ihrer Bahnkurve gemeinsam über eine Verdrehung des ihnen zugeordneten Planetenträgerteils verschoben werden, wie durch die durchgezogenen Pfeile 5 in Fig. 1 angedeutet ist. Auch eine Verdrehung bzw. Verschiebung in die entgegengesetzte Richtung entgegen der durchgezogenen Pfeile 5 ist möglich. Ebenso können die beiden zweiten Planetenräder 4 entlang ihrer Bahnkurve gemeinsam über eine Verdrehung des ihnen zugeordneten Planetenträgerteils verschoben werden, wie durch die gestrichelten Pfeile 6 in Fig. 1 angedeutet ist. Auch eine Verdrehung bzw. Verschiebung in die entgegengesetzte Richtung entgegen der gestrichelten Pfeile 6 ist möglich.

Durch eine beschriebene Verschiebung bzw. Verdrehung der ersten Planetenräder 3 und/oder der zweiten Planetenräder 4 kann bzw. können die Zahnflanken dieser Planetenräder in Anlage zu denen des Hohlrads 1 bzw. des Sonnenrads 2 gebracht werden, wodurch ein Spiel minimiert und ein spielfreies Planetenradgetriebe erzielt werden kann.

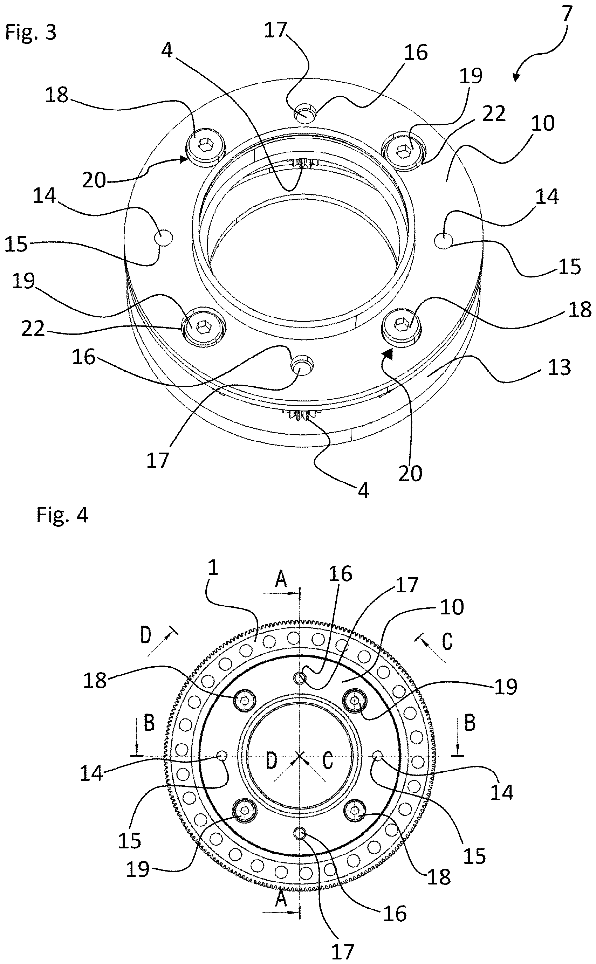

In Fig. 2 und Fig. 3 ist der Planetenträger 7 des erfindungsgemäßen Planetenradgetriebes in perspektivischen Ansichten dargestellt. Der Planetenträger 7 weist einen ersten Planetenträgerteil 8 und einen zweiten Planetenträgerteil 9 auf. Der erste Planetenträgerteil 8 ist dabei durch zwei außenliegende Scheiben 10 und 11 gebildet und der zweite Planetenträgerteil 9 ist im Wesentlichen zwischen den zwei außenliegenden Scheiben 10, 11 angeordnet. Auch der zweite Planetenträgerteil 9 ist vorliegend durch zwei gegenüberliegende Scheiben 12 und 13 gebildet, wie insbesondere aus einer Zusammenschau mit Fig. 3 erkennbar ist.

Wesentlich ist vorliegend, dass die ersten Planetenräder 3 mit dem ersten Planetenträgerteil 8 verbunden sind und die zweiten Planetenräder 4 mit dem zweiten Planetenträgerteil 9 verbunden sind. Darunter ist zu verstehen, dass die Position der ersten Planetenräder 3 bezogen auf ihre Lage auf ihrer Bahnkurve fest mit der Lage des ersten Planetenträgerteils 8 zusammenhängt, während die Lage der zweiten Planetenräder 4 mit der Lage des zweiten Planetenträgerteils 9 korrespondiert. Dies ist daran erkennbar, dass sich die Achsen 14 der ersten Planetenräder 3 bis zu den zwei außenliegenden Scheiben 10, 11 des ersten Planetenträgerteils 8 erstrecken. Die Achsen 14 sind in Bohrungen 15 der beiden Scheiben 10, 11 gelagert, sodass eine Verdrehung der Scheiben 10, 11 bzw. des ersten Planetenträgerteils 8 auch in einer Bewegung der ersten Planetenräder 3 entlang ihrer Bahnkurve resultiert. Die zweiten Planetenräder 4 hingegen weisen - nicht in Fig. 2 jedoch in Fig. 3 zu erkennende - Achsen 17 auf, die sich nicht bis in die außenliegenden Scheiben 10, 11 des ersten Planetenträgerteils 8 erstrecken. Dies ist anhand der Bohrungen 16 in den Scheiben 10, 11 zu erkennen, in denen keine Achsen 17 der zweiten Planetenräder 4 gelagert ist. Demnach ist die Lage der zweiten Planetenräder 4 unabhängig von der Lage des ersten Planetenträgerteils 8.

Vielmehr ist die Lage der zweiten Planetenräder 4 mit der Lage des zweiten Planetenträgerteils 9 gekoppelt. So erstrecken sich, wie anhand von Fig. 3 veranschaulicht ist, die Achsen 17 der zweiten Planetenräder 4 zwar nicht bis in die Bohrungen 16 der Scheibe 10 hinein (sowie nicht in Bohrungen 16 der Scheibe 11 hinein, wie in Fig. 2 zu erkennen ist), sondern die Achsen 17 sind in den Scheiben 12 bzw. 13 des zweiten Planetenträgerteils 9 gelagert. Auf diese Weise werden bei einer Verdrehung des ersten Planetenträgerteils 8, während der zweite Planetenträgerteil 9 ortsfest bleibt, die ersten Planetenräder 3 und die zweiten Planetenräder 4 relativ zueinander auf ihren Bahnkurven bewegt. Das Flankenspiel kann somit eingestellt und minimiert werden.

Der erste Planetenträgerteil 8 und der zweite Planetenträgerteil 9 sind derart eingerichtet, dass sie ausgehend von einer Grundposition gegeneinander verdreht werden und in einer Verdrehposition in ihrer Lage zueinander gesichert werden können.

Dazu sind, wie zuvor bereits beschrieben, die zwei außenliegenden Scheiben 10, 11 des ersten Planetenträgerteils 8 mittels der Achsen 14 der ersten Planetenräder 3 miteinander verbunden. Ferner sind die zwei außenliegenden Scheiben 10, 11 des ersten Planetenträgerteils 8 in dem vorliegend dargestellten und insofern bevorzugten Ausführungsbeispiel mittels zweier, als Innensechskant-Schraube ausgebildeter Einstellschrauben 18 miteinander verbunden.

Die Einstellschrauben 18 sind gegenüberliegend bezüglich des Umfangs der Scheiben 10, 11 angeordnet. Ferner sind sie mittig zwischen zwei benachbarten Achsen 14 der ersten Planetenräder und Achsen 17 der zweiten Planetenräder 4 angeordnet. Es sind in dem dargestellten und insoweit bevorzugten Ausführungsbeispiel jedoch nicht zwischen allen benachbarten Achsen 14 bzw. 17 der ersten bzw. zweiten Planetenräder 3 bzw. 4 Einstellschrauben 18 vorgesehen. Vielmehr sind ferner einfache, ebenfalls als Innensechskant-Schraube ausgebildete Verbindungsschrauben 19 des zweiten Planetenträgerteils 9 vorgesehen. Diese Verbindungsschrauben 19 dienen lediglich dazu, die beiden Scheiben 12 und 13 des zweiten Planetenträgerteils 9 miteinander zu verbinden und somit den zweiten Planetenträgerteil 9 auszubilden. Die Einstellschrauben 18 und die Verbindungsschrauben 19, sowie die Achsen 14 und 17 der ersten bzw. zweiten Planetenräder 3 bzw. 4 sind gleichmäßig verteilt über den Umfang der Scheiben 10, 11, 12, 13 angeordnet.

Die Einstellschrauben 18 sind ferner derart angeordnet, dass ein Schraubenkopf 20 der Einstellschrauben 18 von einer Außenseite der einen Scheibe 10 der zwei außenliegenden Scheiben 10, 11 hervorsteht, während an einem anderen Ende der Einstellschrauben 18 ein Gewinde der Einstellschrauben 18 in die andere Scheibe 11 der zwei außenliegenden Scheiben 10, 11 eingreift, wie anhand einer Zusammenschau von Fig. 2 und Fig. 3 veranschaulicht ist. Ein Feststellen der Einstellschrauben 18 führt somit zu einem Sichern bzw. Festlegen der Position des ersten Planetenträgerteils 8 und des zweiten Planetenträgerteils 9 zueinander, während ein Lösen der Einstellschrauben 18 eine Verdrehbarkeit der beiden Planetenträgerteile 8, 9 und somit ein Verstellen der ersten Planetenräder 3 und der zweiten Planetenräder 4 zueinander und ein Einstellen des Zahnflankenspiels ermöglicht.

Um das Zahnflankenspiel einzustellen bzw. zu minimieren, kann im Einzelnen nach dem Zusammenbau eines erfindungsgemäßen Planetenradgetriebes wie folgt vorgegangen werden: Zunächst können die Einstellschrauben 18, welche als Innensechskant-Schrauben von der Oberseite der Scheibe 10 aus leicht zugänglich sind, gelöst werden; sodann kann der ersten Planetenträgerteil 8 mitsamt der mit diesem verbundenen ersten Planetenräder 3 verdreht werden, sodass sich die ersten Planetenräder 3 entlang ihrer Bahnkurve gegenüber den ortsfest verbleibenden zweiten Planetenrädern 4 und dem zweiten Planetenträgerteil 9 relativ bewegen; schließlich können die Einstellschrauben 18 wieder festgezogen werden und auf diese Weise die Lage des ersten Planetenträgerteils 8 und des zweiten Planetenträgerteils 9 zueinander sowie die Positionen der ersten Planetenräder 3 und der zweiten Planetenräder 4 gesichert bzw. festgelegt werden.

Der zweite Planetenträgerteil 9 ist dabei derart zwischen den zwei außenliegende Scheiben 10, 11 des ersten Planetenträgerteils 8 angeordnet ist, dass der erste Planetenträgerteil 8 und der zweite Planetenträgerteil 9 in ihrer Lage zueinander durch eine von den zwei außenliegenden Scheiben 10, 11 in Richtung des zweiten Planetenträgerteils 9 wirkende Haltekraft festgelegt werden. Das Zusammenhalten bzw. das Ausüben der Haltekraft der beiden Scheiben 10, 11 wird dabei durch ein Anziehen der Einstellschrauben 18 erzielt. Sobald die Einstellschrauben 18 erneut gelöst werden, können der erste Planetenträgerteil 8 und der zweite Planetenträgerteil 9 wieder gegeneinander verdreht werden.

Die Schraubenköpfe der Verbindungsschrauben 19 stehen im Unterschied zu den Schraubenköpfen der Einstellschrauben 20 nicht von der Außenseite der Scheibe 10 des ersten Planetenträgerteils 8 hervor. Auf diese Weise können die Einstellschrauben 18 auf den ersten Blick von außen von den Verbindungsschrauben 19 unterschieden werden, sodass ein versehentliches Lösen der Verbindungsschrauben 19 im Falle eins gewünschten Einstellens des Zahnflankenspiels erfolgreich vermieden werden kann.

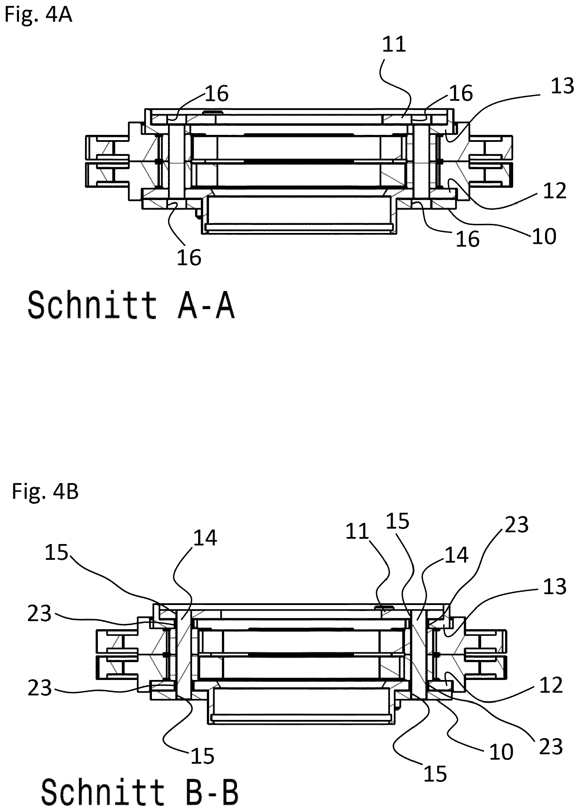

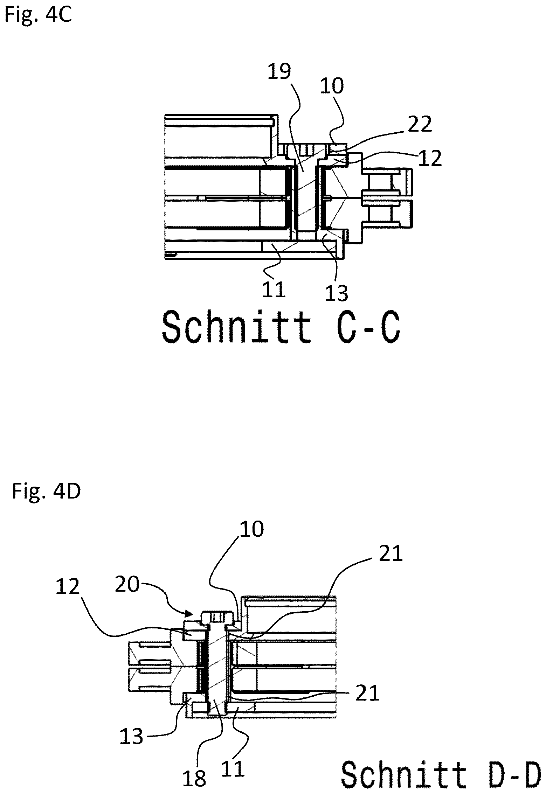

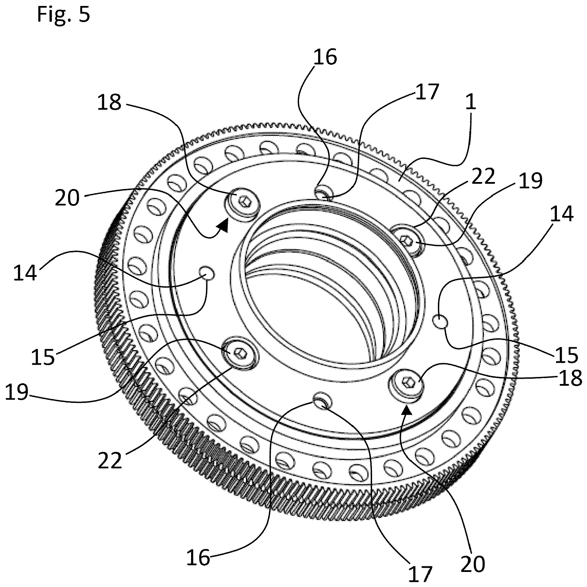

Die weiteren Einzelheiten der vorliegenden Erfindung bzw. vorteilhafte Ausgestaltungen sind anhand der Darstellung in Fig. 4 und den entsprechenden Schnittansichten in Fig. 4A, 4B, 4C und 4D, sowie anhand der perspektivischen Ansicht in Fig. 5 verdeutlicht, wobei sich gleiche Bezugszeichen auf gleiche Merkmale beziehen. Insofern gelten die zuvor gemachten Ausführungen auch für die genannten, weiteren Darstellungen und wird eine wiederholende Erläuterung vermieden.

Anhand einer Zusammenschau der Fig. 4 mit der Fig. 4D wird insbesondere ersichtlich, dass sich die Einstellschrauben 18, die die zwei außenliegenden Scheiben 10 bzw. 11 des ersten Planetenträgerteils 8 miteinander verbinden, durch jeweils eine Bohrung 21 des zweiten Planetenträgerteils 9 erstrecken. Dabei ist die Bohrung 21 des zweiten Planetenträgerteils 9 jeweils derart größer als der Durchmesser der Einstellschrauben 18 ausgebildet, dass bei einem Lösen der Einstellschrauben 18 eine Verdrehung des ersten Planetenträgerteils 8 gegenüber dem zweiten Planetenträgerteil 9 möglich ist, auch während sich die Einstellschraube 18 weiterhin durch die jeweilige Bohrung 21 des zweiten Planetenträgerteils 9 erstreckt. Die Bohrungen 21 in dem zweiten Planetenträgerteil 9 sind in den jeweiligen Scheiben 12 und 13 vorgesehen. Dadurch, dass diese Bohrungen 21 größer ausgebildet sind als der Durchmesser der Einstellschrauben 18, wird ein Bewegungsspielraum bereitgestellt, in welchem der erste Planetenträgerteil 8 gegen den zweiten Planetenträgerteil 9 verdreht und somit die ersten Planetenräder 3 relativ zu den zweiten Planetenrädern 4 verschoben werden können. Diese Verdrehbarkeit bzw. die daraus resultierende Einstellbarkeit des Zahnflankenspiels ist bei gelösten Einstellschrauben 18 möglich. Dabei müssen die Einstellschrauben 18 jedoch nur so weit gelöst sein, dass die beiden Scheiben 10 und 11 des ersten Planetenträgerteils 8 nicht mehr so stark zusammengedrückt werden wie zuvor notwendig, um eine Relativbewegung der beiden Planetenträgerteile 8 und 9 zueinander zu verhindern. Sprich die von den beiden Scheiben 10 und 11 auf den zweiten Planetenträgerteil 9 ausgeübte Haltekraft muss gelöst werden, um eine Verdrehung der beiden Planetenträgerteile 8 und 9 gegeneinander zu ermöglichen. Umgekehrt kann die Position der beiden Planetenträgerteile 8 und 9 dann erneut fixiert werden, indem die Einstellschrauben 18 wieder festgezogen und die Scheiben 10 und 11 des ersten Planetenträgerteils 8 gegen die weiter innen liegenden Scheiben 12 und 13 des zweiten Planetenträgerteils 9 gedrückt werden, sodass eine Relativbewegung der Planetenträgerteile 8, 9 zueinander wieder erfolgreich verhindert wird.

In dem vorliegend dargestellten und insofern bevorzugten Ausführungsbeispiel kann es sich bei den Einstellschrauben 18 beispielsweise um M5x24 Schrauben handeln. Die Bohrungen 21 in den Scheiben 12 und 13 können dann Bohrungen mit einem Durchmesser von 6 mm sein, sodass bei gelösten Einstellschrauben 18 eine gewisse Verdrehbarkeit der beiden Planetenträgerteile 8, 9 gegeneinander gewährleistet ist, auch wenn sich die Einstellschrauben 18 durch die Bohrungen 21 und somit durch die Scheiben 12 und 13 des zweiten Planetenträgerteils 9 erstrecken.

Wie in Fig. 4C zudem veranschaulicht ist, ist die Verdrehbarkeit der beiden Planetenträgerteile 8 und 9 ferner in dem dargestellten und insofern bevorzugten Ausführungsbeispiel dadurch gewährleistet, dass die Scheibe 10 eine Bohrung 22 hat, die einen größeren Durchmesser aufweist als der Schraubenkopf der Verbindungsschrauben 19. Konkret können in dem Ausführungsbeispiel als Verbindungsschrauben 19 M5x16 Schrauben vorgesehen sein, die Schraubenköpfe mit einem Durchmesser von 8,5 mm aufweisen, während die Bohrung 22 in der Scheibe 10 einen Durchmesser von 10 mm hat und somit als eine Freimachung für eine Relativbewegung des zweiten Planetenträgerteils 9 mit den Scheiben 12 und 13 und den Verbindungsschrauben 19 gegenüber dem ersten Planetenträgerteil 8 dient.

Wie in Fig. 4B weiterhin veranschaulicht ist, ist die Verdrehbarkeit der beiden Planetenträgerteile 8 und 9 ferner in dem dargestellten und insofern bevorzugten Ausführungsbeispiel dadurch gewährleistet, dass die Scheiben 12 und 13 jeweils Bohrungen 23 für die Achsen 14 der ersten Planetenräder 3 aufweisen, wobei die Bohrungen 23 einen größeren Durchmesser haben als die Achsen 14. Konkret können in dem Ausführungsbeispiel Achsen 14 vorgesehen sein, die einen Durchmesser von 4 mm aufweisen. Auch die Achsen 17 der zweiten Planetenräder 4 weisen einen Durchmesser von 4 mm auf. Die Bohrungen 23 in den Scheiben 12 und 13 weisen hingegen einen Durchmesser von 5 mm auf, sodass eine Freimachung für eine Relativbewegung des ersten Planetenträgerteils 8 mit den Scheiben 10 und 11 mitsamt der ersten Planetenräder 3 und ihren Achsen 14 gegenüber dem zweiten Planetenträgerteil 9 mit den Scheiben 12 und 13, welche die Bohrungen 23 aufweisen, durch die sich die Achsen 14 erstrecken, gewährleistet ist.

## Patentansprüche

1. Planetenradgetriebe mit einem Sonnenrad (2), einem Hohlrad (1) und zumindest einem ersten Planetenrad (3) sowie zumindest einem zweiten Planetenrad (4), wobei:
- das erste Planetenrad (3) sowie das zweite Planetenrad (4) auf einem Planetenträger (7) angeordnet sind, und
- das Sonnenrad (3), das Hohlrad (1), das erste Planetenrad (3) sowie das zweite Planetenrad (4) miteinander kämmen,
wobei der Planetenträger (7) einen ersten Planetenträgerteil (8) und einen zweiten Planetenträgerteil (9) aufweist, wobei der erste Planetenträgerteil (8) und der zweite Planetenträgerteil (9) derart eingerichtet sind, dass sie ausgehend von einer Grundposition gegeneinander verdreht werden und in einer Verdrehposition in ihrer Lage zueinander gesichert werden können, wobei das zumindest eine erste Planetenrad (3) mit dem ersten Planetenträgerteil (8) verbunden ist und das zumindest eine zweite Planetenrad (4) mit dem zweiten Planetenträgerteil (9) verbunden ist, und
wobei der erste Planetenträgerteil (8) durch zwei außenliegende Scheiben (10, 11) gebildet ist und der zweite Planetenträgerteil (9) im Wesentlichen zwischen den zwei außenliegenden Scheiben (10, 11) angeordnet ist,
**dadurch gekennzeichnet, dass**
die zwei außenliegenden Scheiben (10, 11) des ersten Planetenträgerteils (8) mittels zumindest einer Einstellschraube (18) derart miteinander verbunden sind, dass ein Feststellen der zumindest einen Einstellschraube (18) für ein Sichern bzw. Festlegen einer Position des ersten Planetenträgerteils (8) und des zweiten Planetenträgerteils (9) zueinander sorgt, während ein Lösen der zumindest einen Einstellschraube (18) eine Verdrehbarkeit des ersten Planetenträgerteils (8) und des zweiten Planetenträgerteils (9) und somit ein Verstellen des zumindest einen ersten Planetenrads (3) und des zumindest einen zweiten Planetenrads (4) zueinander und ein Einstellen eines Zahnflankenspiels ermöglicht.

2. Planetenradgetriebe nach Anspruch 1, **dadurch gekennzeichnet, dass** der zweite Planetenträgerteil (9) derart zwischen den zwei außenliegenden Scheiben (10, 11) des ersten Planetenträgerteils (8) angeordnet ist, dass der erste Planetenträgerteil (8) und der zweite Planetenträgerteil (9) in ihrer Lage zueinander durch eine von den zwei außenliegenden Scheiben (10, 11) in Richtung des zweiten Planetenträgerteils (9) wirkende Haltekraft festgelegt werden.

3. Planetenradgetriebe nach Anspruch 1 oder 2, **dadurch gekennzeichnet, dass** die zwei außenliegenden Scheiben (10, 11) des ersten Planetenträgerteils (8) mittels einer Achse (14) des zumindest einen ersten Planetenrads (3) miteinander verbunden sind.

4. Planetenradgetriebe nach einem der Ansprüche 1 bis 3, **dadurch gekennzeichnet, dass** sich die zumindest eine Einstellschraube (18), die die zwei außenliegenden Scheiben (10, 11) des ersten Planetenträgerteils (8) miteinander verbindet, durch wenigstens eine Bohrung des zweiten Planetenträgerteils (9) erstreckt, wobei die wenigstens eine Bohrung des zweiten Planetenträgerteils (9) derart größer als der Durchmesser der Einstellschraube (18) ausgebildet ist, dass bei einem Lösen der zumindest einen Einstellschraube (18) eine Verdrehung des ersten Planetenträgerteils (8) gegenüber dem zweiten Planetenträgerteil (9) möglich ist, auch während sich die Einstellschraube (18) durch die wenigstens eine Bohrung des zweiten Planetenträgerteils (8) erstreckt.

5. Planetenradgetriebe nach einem der Ansprüche 1 bis 4, **dadurch gekennzeichnet, dass** das Planetenradgetriebe als einstufiges Planetenradgetriebe ausgebildet ist.

6. Planetenradgetriebe nach einem der Ansprüche 1 bis 4, **dadurch gekennzeichnet, dass** das Planetenradgetriebe als mehrstufiges Planetenradgetriebe ausgebildet ist.

## Claims

1. Planetary gear transmission having a sun gear (2), a ring gear (1) and at least one first planet gear (3) or at least one second planet gear (4), wherein:
- the first planet gear (3) and the second planet gear (4) are arranged on a planet carrier (7) and
- the sun gear (3), the ring gear (1), the first planet gear (3) and the second planet gear (4) mesh with one another,
wherein the planet carrier (7) has a first planet carrier part (8) and a second planet carrier part (9), wherein the first planet carrier part (8) and the second planet carrier part (9) are configured in such a way that, starting from a basic position, they are rotated relative to each other and can be secured in their situation relative to each other in a rotated position, and in that the at least one planet gear (3) is connected to the first planet carrier part (8), and the at least one second planet gear (4) is connected to the second planet carrier part (9) and
wherein the first planet carrier part (8) is formed by two externally situated disks (10, 11) and the second planet carrier part (9) is arranged essentially between the two externally situated disks (10, 11),
**characterized in that**
the two externally situated disks (10, 11) of the first planet carrier part (8) are connected to each other by means of at least one setting screw (18), such that when the at least one setting screw (18) is fixed, this ensures a securing or fixing of a position of the first planet carrier part (8) and the second planet carrier part (9) relative to each other, while when the at least one setting screw (18) is loosened, a rotation of the first planet carrier part (8) and of the second planet carrier part (9) and thus an adjustment of the at least one first planet gear (3) and of the at least one second planet gear (4), and a setting of a tooth flank clearance is possible.

2. The planetary gear transmission as claimed in claim 1, **characterized in that** the second planet carrier part (9) is arranged between the two externally situated disks (10, 11) of the first planet carrier part (8) in such a way that the first planet carrier part (8) and the second planet carrier part (9) are fixed in their situation relative to each other by a retaining force acting from the two externally situated disks (10, 11) in the direction of the second planet carrier part (9).

3. The planetary gear transmission as claimed in claim 1 or 2, **characterized in that** the two externally situated disks (10, 11) of the first planet carrier part (8) are connected to each other by means of a spindle (14) of the at least one first planet gear (3).

4. The planetary gear transmission as claimed in any of claims 1 to 3, **characterized in that** the at least one setting screw (18) which connects the two externally situated disks (10, 11) of the first planet carrier part (8) to each other extends through at least one bore of the second planet carrier part (9), wherein the at least one bore of the second planet carrier part (9) is designed to be greater than the diameter of the setting screw (18) in such a way that, when the at least one setting screw (18) is loosened, rotation of the first planet carrier part (8) relative to the second planet carrier part (9) is possible, even whilst the setting screw (18) extends through the at least one bore of the second planet carrier part (8).

5. The planetary gear transmission as claimed in any of claims 1 to 4, **characterized in that** the planetary gear transmission is designed as a single-stage planetary gear transmission.

6. The planetary gear transmission as claimed in any of claims 1 to 4, **characterized in that** the planetary gear transmission is designed as a multi-stage planetary gear transmission.

## Revendications

1. Engrenage planétaire avec une roue solaire (2), une couronne (1) et au moins une première roue planétaire (3) ainsi qu'au moins une seconde roue planétaire (4), dans lequel :
- la première roue planétaire (3) ainsi que la seconde roue planétaire (4) sont agencées sur un porte-satellites (7), et
- la roue planétaire (3), la couronne (1), la première roue planétaire (3) ainsi que la seconde roue planétaire (4) s'engrènent entre elles,
dans lequel le porte-satellites (7) présente une première partie de porte-satellites (8) et une seconde partie de porte-satellites (9), dans lequel la première partie de porte-satellites (8) et la seconde partie de porte-satellites (9) sont conçues de telle manière qu'elles soient tournées l'une contre l'autre à partir d'une position de base et puissent être bloquées dans leur position l'une par rapport à l'autre dans une position de rotation, dans lequel la au moins une première roue planétaire (3) est reliée à la première partie de porte-satellites (8) et la au moins une seconde roue planétaire (4) est reliée à la seconde partie de porte-satellites (9), et
dans lequel la première partie de porte-satellites (8) est formée par deux disques (10, 11) extérieurs et la seconde partie de porte-satellites (9) est sensiblement agencée entre les deux disques (10, 11) extérieurs,
**caractérisé en ce que**
les deux disques (10, 11) extérieurs de la première partie de porte-satellites (8) sont reliés l'un à l'autre au moyen d'au moins une vis de réglage (18) de telle manière qu'un blocage de la au moins une vis de réglage (18) veille à une sécurisation ou à une fixation d'une position de la première partie de porte-satellites (8) et de la seconde partie de porte-satellites (9) l'une par rapport à l'autre, tandis qu'un desserrement de la au moins une vis de réglage (18) permet une rotation de la première partie de porte-satellites (8) et de la seconde partie de porte-satellites (9) et ainsi un ajustement de la au moins une première roue planétaire (3) et de la au moins une seconde roue planétaire (4) l'une par rapport à l'autre et un réglage d'un jeu de flanc des dents.

2. L'engrenage planétaire selon la revendication 1, **caractérisé en ce que** la seconde partie de porte-satellites (9) est agencée entre les deux disques (10, 11) extérieurs de la première partie de porte-satellites (8) de telle manière que la première partie de porte-satellites (8) et la seconde partie de porte-satellites (9) soient fixées dans leur position l'une par rapport à l'autre par une force de retenue agissant depuis les deux disques (10, 11) extérieurs en direction de la seconde partie de porte-satellites (9).

3. L'engrenage planétaire selon la revendication 1 ou 2, **caractérisé en ce que** les deux disques (10, 11) extérieurs de la première partie de porte-satellites (8) sont reliés l'un à l'autre au moyen d'un axe (14) de la au moins une première roue planétaire (3).

4. L'engrenage planétaire selon l'une quelconque des revendications 1 à 3, **caractérisé en ce que** la au moins une vis de réglage (18) qui relie les deux disques (10, 11) extérieurs de la première partie de porte-satellites (8) l'un à l'autre, s'étend à travers au moins un alésage de la seconde partie de porte-satellites (9), dans lequel le au moins un alésage de la seconde partie de porte-satellites (9) est réalisé de manière plus grande que le diamètre de la vis de réglage (18) de telle manière que lors d'un desserrement de la au moins une vis de réglage (18), une rotation de la première partie de porte-satellites (8) par rapport à la seconde partie de porte-satellites (9) soit possible, même lorsque la vis de réglage (18) s'étend à travers le au moins un alésage de la seconde partie de porte-satellites (8).

5. L'engrenage planétaire selon l'une quelconque des revendications 1 à 4, **caractérisé en ce que** l'engrenage planétaire est réalisé comme engrenage planétaire à un étage.

6. L'engrenage planétaire selon l'une quelconque des revendications 1 à 4, **caractérisé en ce que** l'engrenage planétaire est réalisé comme engrenage planétaire à plusieurs étages.
